# EUROPÄISCHE PATENTANMELDUNG

(11) **EP 3 560 310 A1**
(43) Veröffentlichungstag der Anmeldung: **30.10.2019**
(21) Anmeldenummer: 19171081.3
(22) Anmeldetag: 25.04.2019
(51) Int. Cl.: A01B 23/02

(54) **SCHNEIDELEMENT FÜR EINE LANDWIRTSCHAFTLICHE MASCHINE**

(30) Priorität: 25.04.2018 AT 503512018
(71) Anmelder: Boehlerit GmbH & Co. KG., 8605 Kapfenberg (AT)
(72) Erfinder: Bärnthaler, Walter, 8641 St. Marein im Mürztal (AT); Burböck, Hannes, 8652 Kindberg/Aumühl (AT)
(74) Vertreter: Wirnsberger & Lerchbaum Patentanwälte OG

(57) **Zusammenfassung**

Die Erfindung betrifft ein Schneideelement (1) für eine landwirtschaftliche Maschine, umfassend einen Grundkörper (2) und zumindest einen auf dem Grundkörper (2) im Bereich einer Anlagefläche (21) des Grundkörpers (2) angeordneten Hartmetallkörper (3). Erfindungsgemäß ist vorgesehen, dass die Anlagefläche (21) konvex ausgebildet ist und der Hartmetallkörper (3) eine Einbuchtung (39) aufweist, in deren Bereich der Hartmetallkörper (3) am Grundkörper (2) positioniert ist.

## Beschreibung

Die Erfindung betrifft ein Schneidelement für eine landwirtschaftliche Maschine, umfassend einen Grundkörper und zumindest einen auf dem Grundkörper im Bereich einer Anlagefläche des Grundkörpers angeordneten Hartmetallkörper.

In der Landwirtschaft werden bei der Bodenbearbeitung oftmals diverse Schneidelemente eingesetzt, beispielsweise Grubberscharen, Striegelzinken oder dergleichen. Die Schneidelemente können beispielsweise zur Durchtrennung von Erdreich und Unkraut oder zur Zerkleinerung von Erntegut erforderlich sein und sind hierfür an oder in einer landwirtschaftlichen Maschine oder Einrichtung, beispielsweise einem Traktor mit Pflug oder einem Mähdrescher, angeordnet.

Für lange Zeit wurden Schneidelemente für den Einsatz im landwirtschaftlichen Bereich vornehmlich aus Stahl gefertigt. Stahl ist kostengünstig und lässt sich relativ einfach in gewünschte Formen verarbeiten. Allerdings sind die im landwirtschaftlichen Bereich wirkenden Kräfte teilweise außerordentlich hoch, sodass Stahlteile dementsprechend rasch verschleißen. Man ist daher in jüngerer Zeit dazu übergegangen, entsprechende Schneidelemente selektiv mit Hartmetalleinsätzen zu bestücken. Hartmetall ist zwar deutlich teurer als Stahl, allerdings kann dadurch die Standzeit der Schneidelemente im Einsatz theoretisch in einem solchen Ausmaß verlängert werden, dass insgesamt betrachtet hartmetallbestückte Schneidelemente kostenmäßig besser abschneiden können.

Bei einer Bodenbearbeitung, aber auch bei der Zerkleinerung von Erntegut in bzw. mit einer landwirtschaftlichen Maschine können am Schneidelement hohe Kräfte auftreten. Dies hat sich bei verschiedenen Lösungen auf Basis einer Kombination eines Grundkörpers aus einem Stahl und einem oder mehreren Hartmetalleinsätzen als problematisch erwiesen. Insbesondere konnten Ausbrüche und Risse beobachtet werden, was nach der vorliegenden Erfindung auf eine ungünstige Einleitung der Kräfte von Hartmetallkörper auf den Grundkörper zurückzuführen ist. Dadurch muss der Hartmetallkörper nahezu die gesamte Kraft aufnehmen, was wiederum zu einem unerwünscht schnellen Verschleiß führen kann.

Aufgabe der Erfindung ist es, ein Schneidelement der eingangs genannten Art anzugeben, mit welchem die zuvor geschilderten Nachteile des Standes der Technik vermieden oder zumindest verringert werden können.

Diese Aufgabe wird gelöst, wenn bei einem Schneidelement der eingangs genannten Art die Anlagefläche konvex ausgebildet ist und der Hartmetallkörper eine Einbuchtung aufweist, in deren Bereich der Hartmetallkörper am Grundkörper positioniert ist. Durch eine entsprechende Ausbildung können Zug- und Biegekräfte am Hartmetallkörper merklich verringert werden. Darüber hinaus werden die Kräfte besser auf den Grundkörper bzw. Träger ab- und in diesen eingeleitet. Mit einer verbesserten Kraftübertragung sowie einer Minimierung der Zug- und Biegekräfte reduziert sich im Einsatz eine Belastung für den Hartmetallkörper, wodurch dessen Standzeit und damit auch die Standzeit des Schneidelementes erhöht sind.

Um die erforderliche Schnittwirkung zu erreichen, ist der Hartmetallkörper in Schneidrichtung vorragend am Grundkörper positioniert. Der Hartmetallkörper selbst kann aus bekannten Hartmetallsorten gebildet sein. Vorzugsweise kommt ein Hartmetall aus Wolframcarbid mit Cobalt als Bindemetall zur Anwendung, wenngleich auch Nickel oder Eisen sowie Mischungen aus den erwähnten Metallen Cobald, Nickel und/oder Eisen als Bindemetall zum Einsatz kommen können. Ein Gehalt an Wolframcarbid kann dabei etwa 88 Gewichtsprozent (Gew.-%) bis 98 Gew.-%, vorzugsweise 90 Gew.-% bis 95 Gew.-%, umfassen, Rest Cobalt als Bindemetall. Eine Vickers-Härte HV 30 kann im Bereich von etwa zumindest 1600 oder höher, beispielsweise im Bereich von 1600 bis 1800 liegen. Eine durchschnittliche Korngröße des eingesetzten Wolframcarbids kann im Bereich von 0,8 µm bis 1,3 µm liegen, wenngleich grundsätzlich auch feineres Korn als 0,8 µm verwendet werden kann, wenn aufgrund von Einsatzbedingungen eine besonders Härte gewünscht ist.

Der Hartmetallkörper, der am Grundkörper positioniert bzw. angeordnet ist, ist üblicherweise länglich ausgebildet. Die rücksichtige Einbuchtung kann sich entlang einer gesamten Längserstreckung des Hartmetallkörpers erstrecken. Vorzugsweise weist die Einbuchtung entlang deren Erstreckung einen zumindest im Wesentlichen gleichbleibenden Querschnitt quer zur Längsachse auf. Entlang der gesamten Längserstreckung des Hartmetallkörpers kann dieser rückseitig bzw. im Bereich einer Einbuchtung am Grundkörper positioniert sein. Dabei kann der Hartmetallkörper in einem Querschnitt zu einer Längsachse des Hartmetallkörpers im Wesentlichen v-förmig oder u-förmig ausgebildet sein. Der Hartmetallkörper kann sich auch in diesem Fall durchgängig entlang dessen gesamter Länge im Bereich einer Rückseite bzw. im Bereich der Einbuchtung über den Grundkörper erstrecken. Dabei kann insbesondere auch vorgesehen sein, dass der Hartmetallkörper in einem Querschnitt zu einer Längsachse des Hartmetallkörpers mit einer Breite ausgebildet ist, die zumindest 75 %, vorzugsweise zumindest 85 %, insbesondere zumindest 95 % einer Breite des Grundkörpers beträgt. Dadurch ist, weil der Hartmetallkörper in Schnittrichtung vorgeordnet ist, der darunterliegende Grundkörper weitgehend vor Verschleiß geschützt. Darüber hinaus ergibt sich auch der Vorteil einer besonders günstigen Ausnutzung der Anlagefläche, was wiederum dazu führt, dass auf dem Hartmetallkörper im Einsatz einwirkende Kräfte besser auf den Grundkörper abgeleitet werden können.

Zur Erzielung der gewünschten Schnittwirkung kann der Hartmetallkörper eine stirnseitige Schneidkante oder eine stirnseitige Schneidfläche aufweisen. Die konkrete Ausbildung eines schneidaktiven Bereiches hängt vom Anwendungszweck ab. Für Anwendungen wie beispielsweise Striegelzinken ist eine flächige Ausbildung eines schneidaktiven Bereiches ausreichend. Für andere Anwendungen, beispielsweise bei Einsatz des Schneidelementes in einem Strohhäckselmesser einer landwirtschaftlichen Maschine, ist hingegen eine Schneidkante von Vorteil. Die Schneidkante kann allerdings, ebenfalls mit Vorteil, verrundet sein, um hohe Spannungsspitzen und damit mögliche Ausbrüche im Einsatz möglichst hintanzuhalten.

Neben der Schneidkante oder Schneidfläche, die stirnseitig angeordnet sind, weist der Hartmetallkörper in der Regel an die Schneidkante oder Schneidfläche anschließende äußere Seitenflächen auf. Diese äußeren Seitenflächen verlaufen zu einem hinteren Ende des Hartmetallkörpers. Auch in diesen Bereichen können im Schneideinsatz relativ hohe (Schnitt-)Kräfte auftreten. Da diese Seitenflächen zum hinteren Ende des Hartmetallkörpers verlaufen und diesen Seitenflächen die Anlagefläche gegenüberliegt, wird auch über diese Seitenflächen eine gute Kraftüberleitung in den Grundkörper erreicht. Die Seitenflächen können schließlich in verrundete Enden des Hartmetallkörpers übergehen.

Der Hartmetallkörper kann am Schneidelement grundsätzlich auf beliebige Art befestigt sein, beispielsweise mit einem oder mehreren lösbaren Befestigungsmitteln wie Schrauben. Möglich ist es auch, dass der Hartmetallkörper mit einem Spannmechanismus auf bzw. an den Grundkörper geklemmt ist. Besonders bevorzugt ist es jedoch, dass der Hartmetallkörper im Bereich der Anlagefläche mit dem Grundkörper stoffschlüssig verbunden ist. Hierfür kommen Kleben oder Löten infrage, wobei Kleben bevorzugt ist.

Der Hartmetallkörper ist üblicherweise längserstreckt ausgebildet. Bei einer solchen Ausbildung ist der längliche Hartmetallkörper mit einer Dimensionierung ausgebildet, bei welcher eine Länge des Hartmetallkörpers eine Breite um ein Vielfaches übersteigt, beispielsweise zumindest fünffach oder zumindest zehnfach.

Der Grundkörper ist üblicherweise aus einem Stahl gebildet. Der Grundkörper dient vornehmlich dazu, einerseits den Hartmetallkörper zu tragen und andererseits in die landwirtschaftliche Maschine integriert zu werden.

Entsprechend den vorstehenden Ausführungen umfasst die Erfindung weiter eine landwirtschaftliche Maschine mit einem erfindungsgemäßen Schneidelement.

Weitere Merkmale, Vorteile und Wirkungen ergeben sich aus den nachfolgend dargestellten Ausführungsbeispielen. In den Zeichnungen, auf welche dabei Bezug genommen wird, zeigen:
Fig. 1 eine perspektivische Darstellung eines Schneidelementes für ein Strohhäckselmesser;
Fig. 2 eine Seitenansicht des Schneidelementes aus Fig. 1;
Fig. 3 eine weitere seitliche Ansicht auf das Schneidelement gemäß Fig. 1;
Fig. 4 eine schematische Darstellung von auf einen Hartmetallkörper eines Schneidelementes einwirkenden Kräften;
Fig. 5 eine perspektivische Darstellung eines weiteren Schneidelementes;
Fig. 6 eine Seitenansicht des Schneidelementes gemäß Fig. 5;
Fig. 7 eine weitere seitliche Ansicht auf das Schneidelement gemäß Fig. 5.

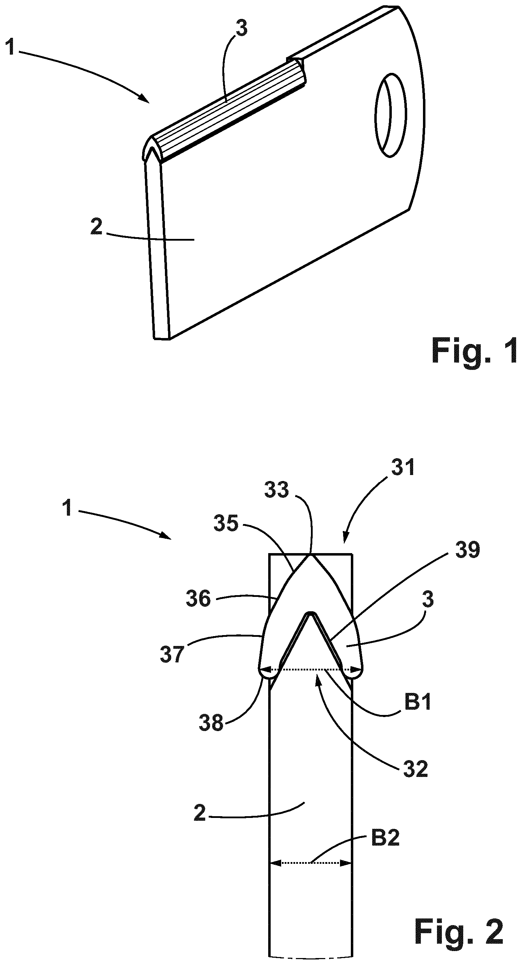

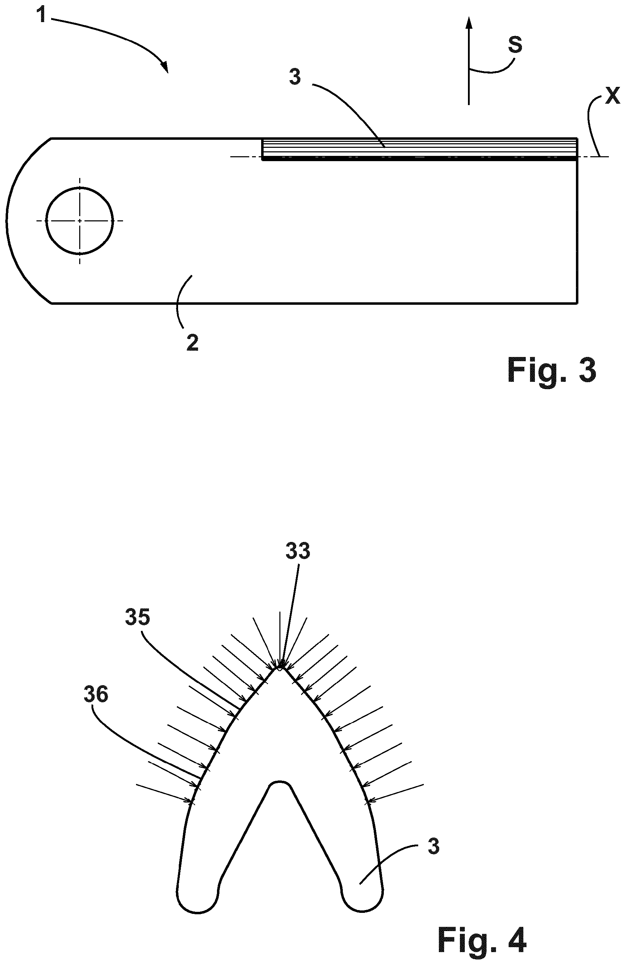

In Fig. 1 bis 3 ist als ein erstes Beispiel ein erfindungsgemäßes Schneidelement 1 in Form eines Strohhäckselmessers dargestellt. Das Schneidelement 1 weist einen Grundkörper 2 auf, der mit einer Längserstreckung flach ausgebildet ist. Der Grundkörper 2 weist eine Öffnung auf, in deren Bereich das Schneidelement 1 in einer Strohhäckseleinrichtung einer landwirtschaftlichen Maschine befestigbar ist. Der Grundkörper 2 trägt einen Hartmetallkörper 3. Wie insbesondere aus Fig. 2 ersichtlich ist, ist der Hartmetallkörper 3 an einer Stirnseite 31 mit einer stirnseitigen Schneidkante 33 sowie zu einer Rückseite 32 hin abfallenden Seitenflächen 35, 36, 37 ausgebildet, die schließlich in verrundete Enden 38 übergehen. Wie ebenfalls aus Fig. 2 ersichtlich ist, ist der Hartmetallkörper 3 im Wesentlichen v-förmig ausgebildet, wobei an einer Rückseite 32 des Hartmetallkörpers 3 eine Einbuchtung 39 vorgesehen ist. Im Bereich der Einbuchtung 39 ist der Hartmetallkörper 3 am Grundkörper 2 befestigt. Der Hartmetallkörper 3 ist an einer Anlagefläche 21 des Grundkörpers 2 positioniert, wobei die Anlagefläche 21 konvex ausgebildet ist. Die nach außen gewölbte Form der Anlagefläche 21 erlaubt es, den Hartmetallkörper 3 im Bereich der Einbuchtung 39 desselben großflächig auf die Anlagefläche 21 aufzusetzen. Eine Verbindung dieser Teile erfolgt vorzugsweise durch Kleben, wenngleich der Hartmetallkörper 3 auch aufgelötet oder mit mechanischen Befestigungsmitteln am Grundkörper 2 befestigt sein kann. Wie aus Fig. 3 ersichtlich ist, ist der Hartmetallkörper 3 länglich ausgebildet und erstreckt sich entlang einer Längsachse X. Im Schneideinsatz rotiert das Schneidelement 1 in Richtung einer Schneidrichtung S. Die Schneidkante 33, welche verrundet ausgebildet ist, ist dann schneidaktiv. Der Grundkörper 2 folgt in Schneidrichtung S dem Hartmetallkörper 3 nach. Da der Hartmetallkörper 3 mit einer Breite B1 ausgebildet ist, welche größer als eine Breite B2 des Grundkörpers ist, ist ein Verschleiß des Grundkörpers 2 minimiert.

In Fig. 4 ist schematisch der Hartmetallkörper 3 mit den auf die Schneidkante 33 und die Seitenflächen 35, 36, 37 einwirkenden Kräften dargestellt. Aufgrund der an der Rückseite 32 des Hartmetallkörpers 3 vorgesehenen Einbuchtung 39 werden die einwirkenden Kräfte effizient auf den Grundkörper 2 übertragen, wodurch der Hartmetallkörper 3 vor raschem Verschleiß geschützt ist. Darüber hinaus treten lediglich akzeptable Zug- und Biegekräfte auf.

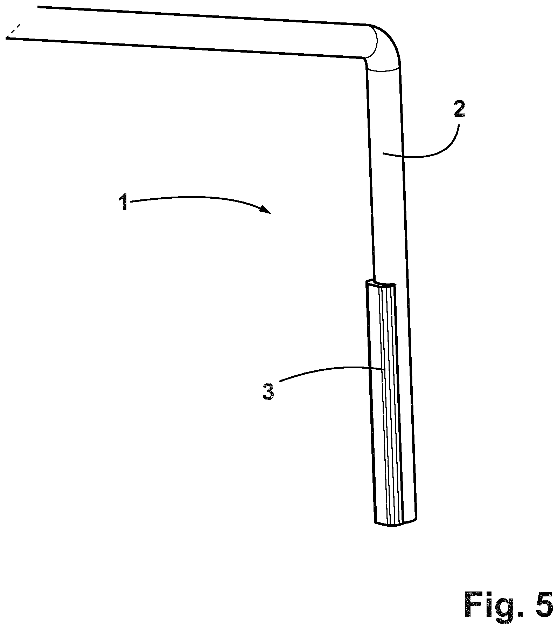

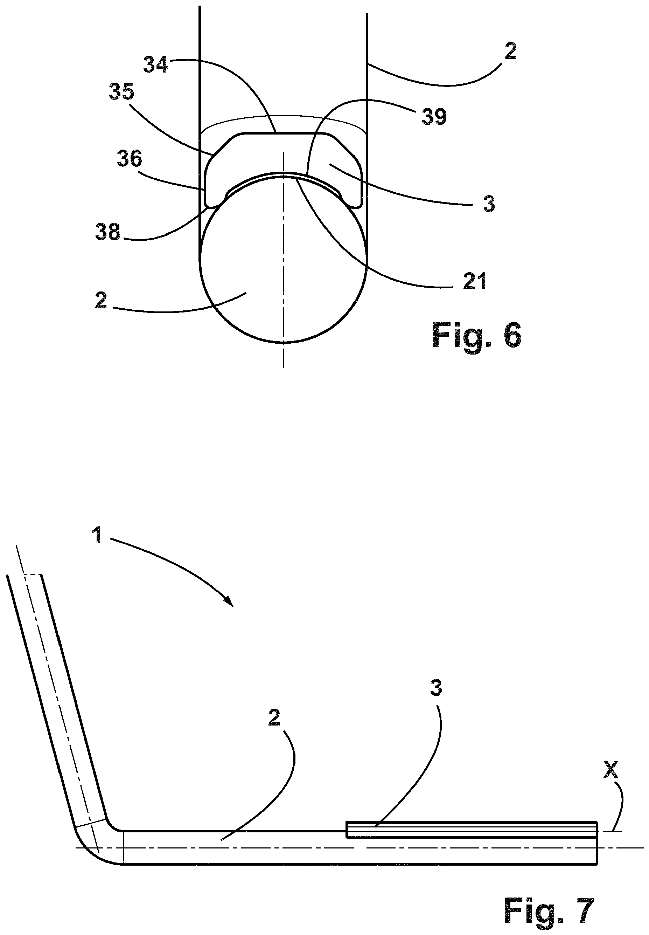

In Fig. 5 bis 7 ist ein weiteres Ausführungsbeispiel dargestellt. In diesem Fall ist das Schneidelement 1 als Striegelzinken ausgebildet. Wiederum ist ein Grundkörper 2 vorgesehen, auf dem ein länglich ausgebildeter Hartmetallkörper 3 positioniert ist. In diesem Fall ist der Hartmetallkörper, wie aus Fig. 6 ersichtlich ist, u-förmig ausgebildet. Der Hartmetallkörper 3 weist in dieser Variante stirnseitig eine Schneidfläche 34 auf. An diese Schneidfläche 34 schließen Seitenflächen 35, 36 an, die wiederum in verrundete Enden 38 übergehen. Der Hartmetallkörper 3 ist mit einer rückseitigen Einbuchtung 39 an der Anlagefläche 21, die wie jene gemäß den Fig. 1 bis 3 konvex ausgebildet ist, positioniert. Es kommen wiederum beliebige Verbindungsmittel zum Einsatz, wobei wiederum Kleben bevorzugt ist.

Wie aus Fig. 7 ersichtlich ist, ist der Hartmetallkörper 3 länglich ausgebildet und weist eine Längsachse X auf. Des Weiteren deckt der Hartmetallkörper 3, wie insbesondere aus Fig. 5 ersichtlich ist, eine Breite B1 auf, welche nahezu eine gesamte Breite B2 des Grundkörpers 2 im Querschnitt abdeckt. Dadurch ist wiederum sichergestellt, dass der Grundkörper im Einsatz keinen merklichen Verschleiß unterliegt. Aufgrund der u-förmigen Ausbildung des Hartmetallkörpers 3 wiederum mit einer Einbuchtung 39 an einer Rückseite 32, welcher einer Stirnseite 31 gegenüberliegt, ergibt sich eine gute Krafteinleitung, wenn Striegelzinken im landwirtschaftlichen Einsatz durch Erdreich gezogen werden, wobei an sich hohe Kräfte auf den Hartmetallkörper 3 wirken.

## Patentansprüche

1. Schneidelement (1) für eine landwirtschaftliche Maschine, umfassend einen Grundkörper (2) und zumindest einen auf dem Grundkörper (2) im Bereich einer Anlagefläche (21) des Grundkörpers (2) angeordneten Hartmetallkörper (3), **dadurch gekennzeichnet, dass** die Anlagefläche (21) konvex ausgebildet ist und der Hartmetallkörper (3) eine Einbuchtung (39) aufweist, in deren Bereich der Hartmetallkörper (3) am Grundkörper (2) positioniert ist.

2. Schneidelement (1) nach Anspruch 1, **dadurch gekennzeichnet, dass** der Hartmetallkörper (3) länglich ausgebildet ist.

3. Schneidelement (1) nach Anspruch 2, **dadurch gekennzeichnet, dass** der Hartmetallkörper (3) in einem Querschnitt zu einer Längsachse (X) des Hartmetallkörpers (3) im Wesentlichen v-förmig oder u-förmig ausgebildet ist.

4. Schneidelement (1) nach Anspruch 2 oder 3, **dadurch gekennzeichnet, dass** der Hartmetallkörper (3) in einem Querschnitt zu einer Längsachse (X) des Hartmetallkörpers (3) mit einer Breite (B1) ausgebildet ist, die zumindest 75 %, vorzugsweise zumindest 85 %, insbesondere zumindest 95 %, einer Breite (B2) des Grundkörpers (2) beträgt.

5. Schneidelement (1) nach einem der Ansprüche 1 bis 4, **dadurch gekennzeichnet, dass** der Hartmetallkörper (3) eine stirnseitige Schneidkante (33) oder eine stirnseitige Schneidfläche (34) aufweist.

6. Schneidelement (1) nach Anspruch 5, **dadurch gekennzeichnet, dass** der Hartmetallkörper (3) an die Schneidkante (33) oder die Schneidfläche (34) anschließende äußere Seitenflächen (35, 36, 37) aufweist.

7. Schneidelement (1) nach Anspruch 6, **dadurch gekennzeichnet, dass** der Hartmetallkörper (3) verrundete Enden (38) aufweist.

8. Schneidelement (1) nach einem der Ansprüche 1 bis 7, **dadurch gekennzeichnet, dass** der Hartmetallkörper (3) am Schneidelement (1) stoffschlüssig befestigt ist.

9. Schneidelement (1) nach einem der Ansprüche 1 bis 8, **dadurch gekennzeichnet, dass** der Grundkörper (2) aus einem Stahl gebildet ist.

10. Landwirtschaftliche Maschine, umfassend ein Schneidelement (1) nach einem der Ansprüche 1 bis 9.
